# EUROPEAN PATENT SPECIFICATION

(11) **EP 0 378 424 B1**
(45) Date of publication and mention of the grant of the patent: **24.08.1994**
(21) Application number: 90300344.0
(22) Date of filing: 11.01.1990
(51) Int. Cl.: H04L 1/00, H04L 12/26, G06F 11/00

(54) **Link transmission priority start**
Prioritätsstart bei der Übertragung auf Verbindungsleitungen
Start de priorité à la transmission par lignes de jonction

(30) Priority: 13.01.1989 US 297714
(43) Date of publication of application: 18.07.1990
(73) Proprietor: International Business Machines Corporation, Armonk, N.Y. 10504 (US)
(72) Inventor: Mathis, Joseph Richard, Georgetown Texas 78628 (US); Rouse, Gerald Lavelle, Round Rock Texas 78681 (US)
(74) Representative: Bailey, Geoffrey Alan

(56) References cited:
- DE-A- 2 310 222
- GB-A- 1 553 572
- US-A- 4 769 761

## Description

This invention is related to the transmission of digital data over serial links and more particularly to a technique which provides the ability to begin the transmission of data over the link when protective controls would otherwise prevent data transmission.

The present invention provides a solution to problems which may occur in the transmission of data on a serial link. The serial link may be a fibre optic link or may comprise conventional copper conductors. In the transmission of digital information over such a link, the performance of the link has been increased by utilizing link hardware, rather than a system processor and software, to prevent a transmission from occurring unless the link is reported to be in a working state and not presently busy.

With laser/fiber optic links there are safety considerations which mandate the use of hardware protection to prevent the link being used when certain error conditions are present. For example, if an optical fibre is disconnected it may ordinarily be necessary to ensure that no transmission on the link can occur, to prevent someone from holding the fibre to the eye as a laser attempted to send data down the link.

DE-A-2310222 discloses a data transmission system of the type having error checking and protection from attempting transmission in the presence of an error condition.

However, with such a protective hardware implemented process it becomes impossible to transfer error recovery or diagnostic routines over the link in instances in which this protective process would prevent a link transmission from taking place.

As an example, assume that it is desired to send data from point A to point B. However, the information associated with link status indicates that the link between these points is not operable or that the receiver at point B is not operable. In this case it may be very desirable to transmit error recovery data to point B to attempt to cure this problem, assuming, for example, that the receiver at point B simply needs to be reset. Alternatively, it may be highly desirable to transmit diagnostic routines from point A to point B in an effort to determine the nature of the failure. However, in either of these cases, transmission of any data over the channel is impossible, since the protective process prevents the transmission on the basis that the data would not be reliably received at point B.

Also, for initialization purposes it is desirable to transmit synchronization characters when it is detected that a signal is not being received. If the link is fibre optic with a laser driver, as noted above it is necessary to observe safety rules concerning the possibility of physical removal of the fibre. Thus, the normal protective features for both safety considerations and a link inoperative error would prevent the hardware from transmitting the synchronization characters.

As another example, assume that a transmitter at point B is continuing to send the same data to point A and has done so for hundreds of times. Obviously this is not intended and it is desirable for point A to inform point B of this and, possibly, attempt to reset point B. However, point A cannot transmit because point B is transmitting.

It would therefore be highly advantageous, in a link communications system which has protection to prevent the transmission of data during link outages and simultaneous data transmission, to be able to force data onto the link for error recovery and diagnostic purposes.

Accordingly the present invention provides, in a data processing system having a channel for conveying data between first and second devices, which system includes error checking and protection from attempting communication through said channel during the presence of an error condition, a method for utilizing said channel during said error condition characterised by the steps of:
testing said error condition to determine if said error condition is a soft error or a hard error; and
issuing a priority start command to start said channel of said data processing system when a request to utilize said channel is presented during the presence of a hard error.

The present invention also provides a data processing system comprising:
a channel for conveying data between first and second devices,
error checking and protection from attempting communication through said channel during the presence of an error condition,
and characterised by:
means for testing said error condition to determine if said error condition is a soft error or a hard error; and
means responsive to said means for testing for issuing a priority start command to start said channel of said data processing system when a request to utilise said channel is presented during the presence of a hard error.

Accordingly, in a link communications system or other such channel for conveying data, which system or channel includes error checking circuitry and protection from attempting communication through the link or channel when error conditions are indicated, this invention overcomes the inability of attempting to use the channel to convey error clearing routines or diagnostic data on the channel during such an error condition by the provision of a priority start technique in which a start of transmission over the channel is attempted without reference to any of the protective features which would otherwise prevent a normal start command from being honoured.

After encountering an error associated with the channel, tests are made to determine if the error is a normal error or an abnormal error. In this context an example of a normal (soft) error is one associated with the integrity of the data rather than the integrity of the link. An abnormal (hard) error is often a more serious error such as a loss of signal on the link. The recovery operation following a normal error ends with a normal channel start attempt. The recovery following an abnormal error includes the priority start which ignores the fact that the error would otherwise preclude starting the channel according to the normal channel start technique. The safety concerns associated with transmitting over an interrupted link may be met by minimizing the durations of the transmissions and sending only short character bursts.

In order that the invention may be fully understood a preferred embodiment thereof will now be described, by way of example only, with reference to the accompanying drawings in which:-

Figs. 1 and 2 depict typical connections of devices for direct transfer of data therebetween.

Fig. 3 is a block diagram of typical receiver and transmitter circuitry associated with data transfer over a link.

Fig. 4 is a flow diagram which shows the operation of handling an I/O request prior to issuing a start command.

Fig. 5 is a flow diagram which shows the operation of a normal start of a channel.

Fig. 6 is a flow diagram which shows the operation of a normal recover from a normal error condition associated with the channel.

Fig. 7 is a flow diagram which shows the operation of a hard recover from an abnormal error condition associated with the channel.

Fig. 8 is a flow diagram which shows the operation of a channel interrupt.

Fig. 9 is a flow diagram which shows the operation of a timeout interrupt.

Fig. 10 is a flow diagram which shows the operation of the priority start of the channel.

Fig. 11 is a flow diagram which shows the operation of an I/O termination.

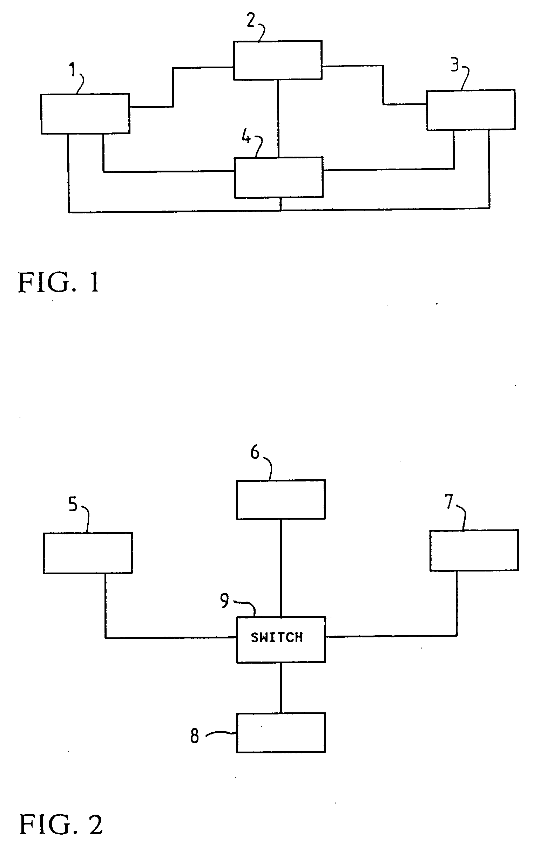

Referring now to Fig. 1, a typical, prior art connection of devices for direct data transfer therebetween is shown. In Fig. 1 devices 1-4 may be processors, storage controllers, communications transmitter receiver pairs, or any combination of such devices or other devices. Fig. 1 shows a possible connection of any of devices 1-4 to any or all of the other devices 1-4. Fig. 2 shows another prior art connection of devices 5-8 which devices are similar to devices 1-4. Devices 5-8 each connect through a switch 9 such that any of devices 5-8 may be singly connected to another of these devices through the switch 9.

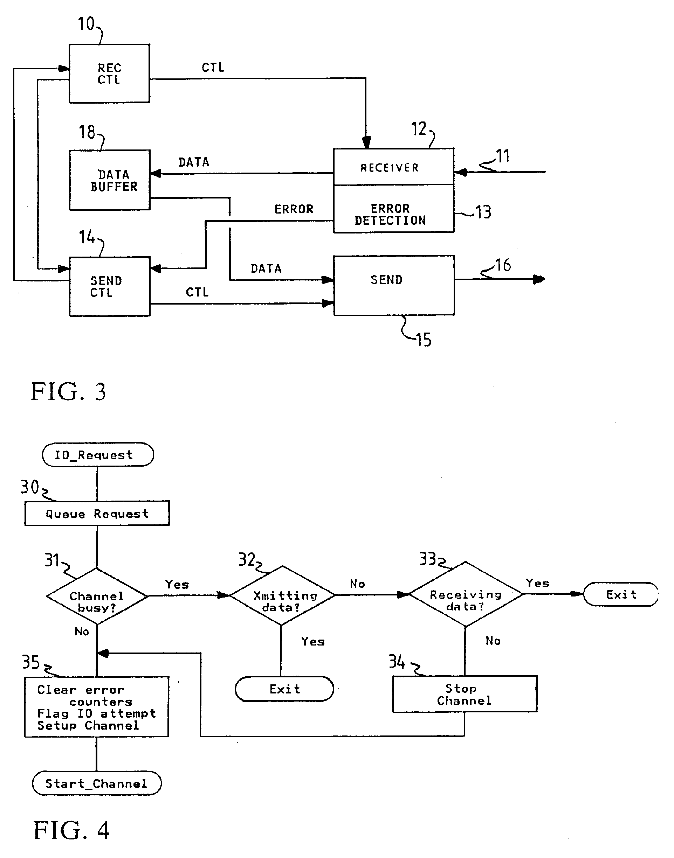

Fig. 3 is a block diagram of typical, prior art receiver and transmitter circuitry associated with data transfer over links such as those shown in Figs. 1 and 2. In Fig. 3 receive control logic 10 enables a receiver 12 to receive data on line 11. Error detection circuitry 13 monitors the incoming data for errors. The incoming data is stored in a data buffer 18 which is accessible to a data processing system (not shown) for further utilizing or storing the received data. If errors in the incoming data are detected, an error signal is conveyed to the send control logic 14. The send control logic 14 then generates a control signal to the send circuitry 15. The send circuitry 15 is able to send a message back on line 16 to tell the station which sent the erroneously received data to send the data again. Data loaded into the data buffer 15 by the data processing system can also be transmitted on line 16 by the send circuitry 15.

The link transmission priority start technique of this invention is now described beginning with reference to Fig. 4. The technique begins with the assumption that an input/output (I/O) request has been made. At 30 the I/O request is queued. At 31 a test is made to determine if the channel is busy. If the channel is busy a test is made at 32 to determine whether the channel is busy transmitting data, or busy for some other reason. If the channel is busy transmitting data, the operation is exited. If not, at 33 a test is made to determine if the channel is busy because it is receiving data. If the channel is receiving data the process is exited. If the channel is busy but neither transmitting nor receiving data, the channel is listening and, in this case, a stop channel command is issued at 34 to stop the channel from listening and the process proceeds to 35. Alternatively, if the channel is not busy at 31, (neither transmitting, receiving, nor listening) the operation proceeds directly to 35. Thereafter the normal start channel process is entered.

The following programming design language listing is another form of the description of the above-described I/O request operation. In this listing and in subsequent listings, portions of text printed between asterisks (*...*) should be regarded as comments to aid the reader, and not as program instructions. This listing parallels the operation described above for Fig. 4.

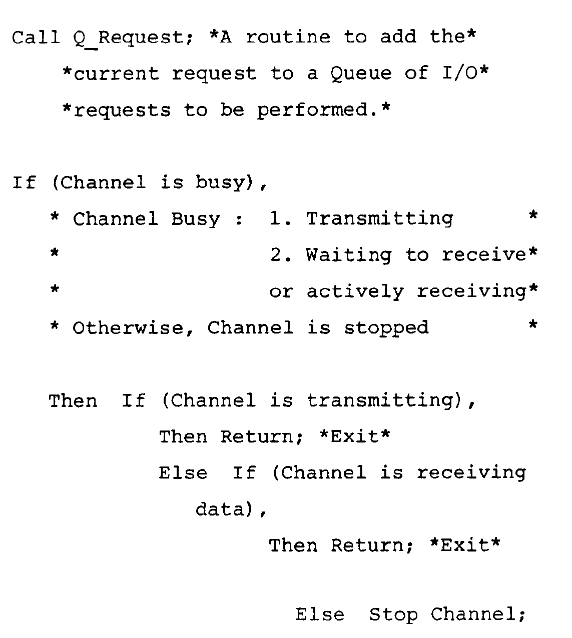

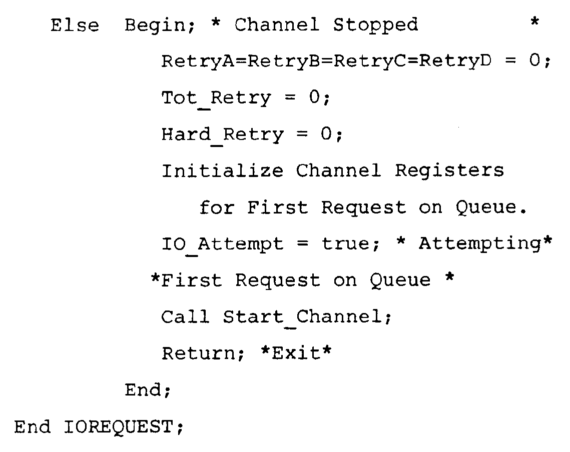

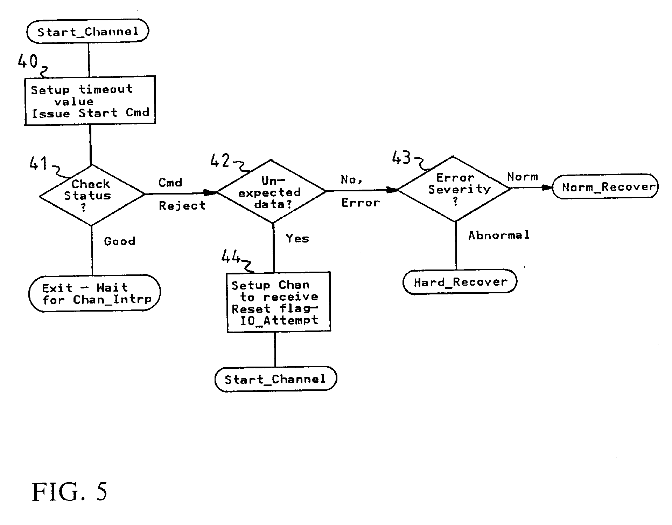

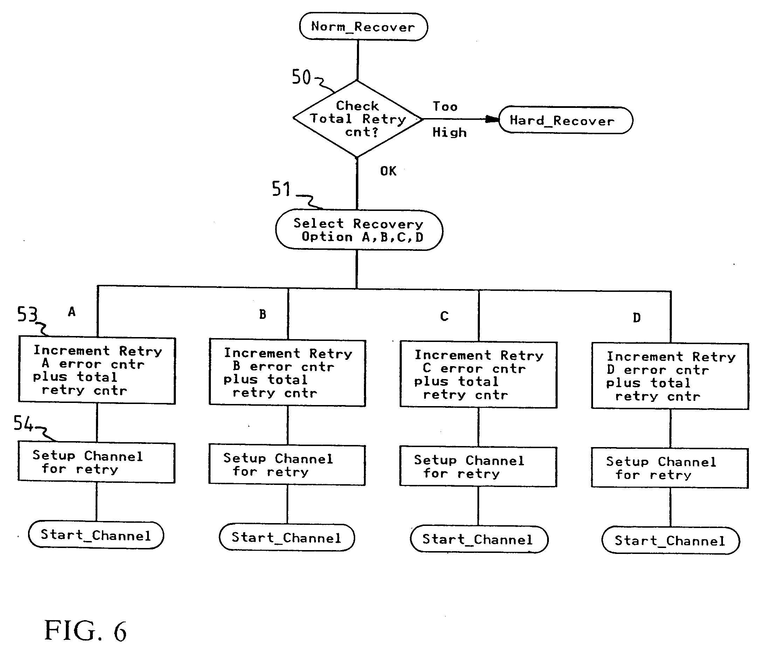

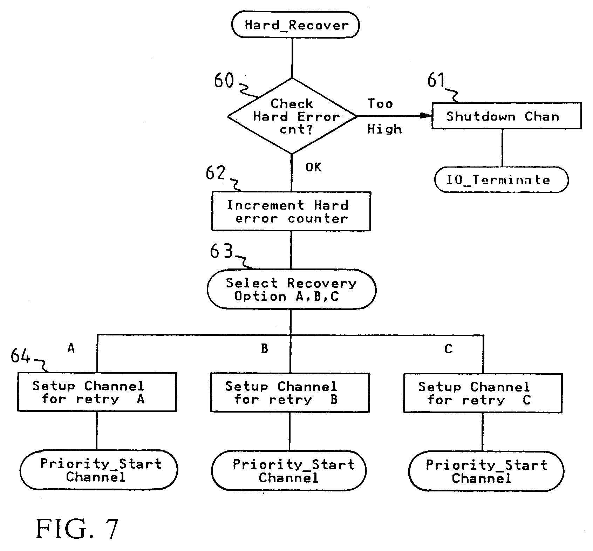

In Fig. 5 the normal start channel process is shown. At 40 a time out is established to abort this process if it is not completed before the end of the time out. Also at 40 the normal channel start command is issued. At 41 a status check is made to determine if the start command can be honoured. If the start command must be rejected, a test is made at 42 to determine if the rejection is because unexpected data is now present. If not, an error is assumed and the operation proceeds to 43 at which point a test is made to determine the severity of the error. If the error is a normal error, such as a cyclic redundancy check (CRC) error or invalid code pattern for a character, the operation proceeds to the normal recover routine to be described below with reference to Fig. 6. If the error is an abnormal error, such as a loss of signal or synchronization on the channel, the operation proceeds to the hard (abnormal) recover routine to be described below with reference to Fig. 7.

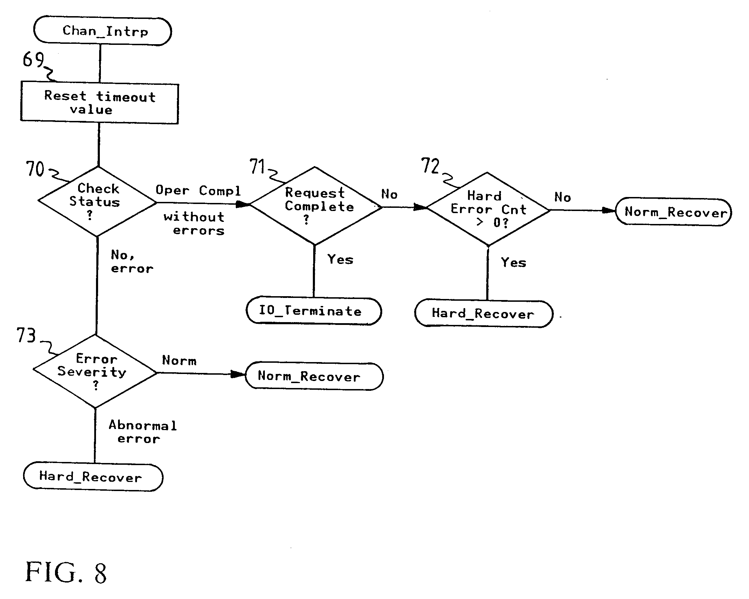

If at 42 the start command must be rejected because unexpected data is now present, then at 44 the channel is set up in the receive mode and the current I/O request is requeued to be honoured after the unexpected data has been received. The operation then proceeds back to the beginning of the flow diagram shown in figure 5 for the normal channel start. At 41, if the start command can be honoured the operation is exited and awaits the channel interrupt, to be described below with reference to Fig. 8.

The following programming design language listing is another form of the description of the above start channel operation. This listing parallels the operation described above for Fig. 5.

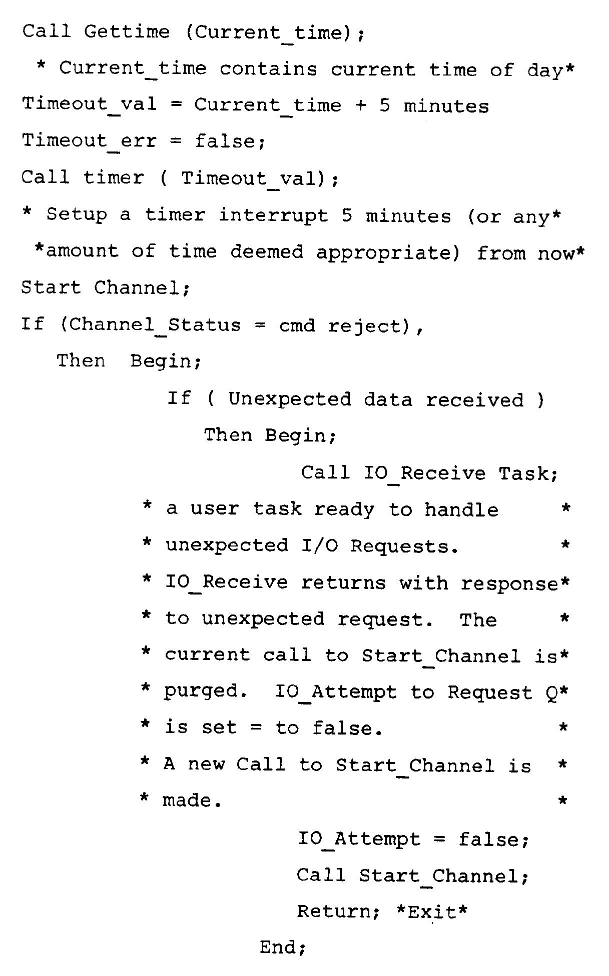

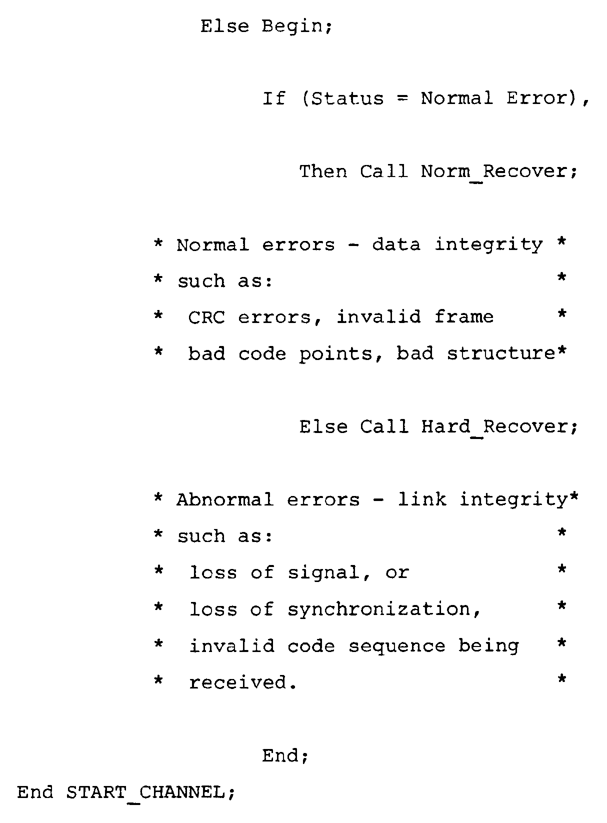

At 43 in Fig. 5, assume that a normal error is encountered. Control then passes to Figure 6.

The normal error recovery operation is described with reference to Fig. 6. In Fig. 6 a total retry counter is tested (step 50). If the total retry count exceeds a predetermined maximum, the error will then be treated as an abnormal error, rather than a normal error. Assuming at 50 that the maximum retry count has not been exceeded, at 51 an appropriate recovery option is selected. Those skilled in the art will appreciate that each type of normal error may have a unique, optimum recovery option, which is chosen during this operation according to the type of normal error that is detected. Only one such recovery option "A" will be described, for the purposes of illustration, although it will be appreciated that numerous recovery options will be available.

At 53 both the retry count for recovery option "A" and the total retry counts are incremented. Then at 54 the channel is set up for a normal start which is thereafter attempted.

The following programming design language listing is another form of the description of the above normal recovery operation. This listing parallels the operation described above for Fig. 6.

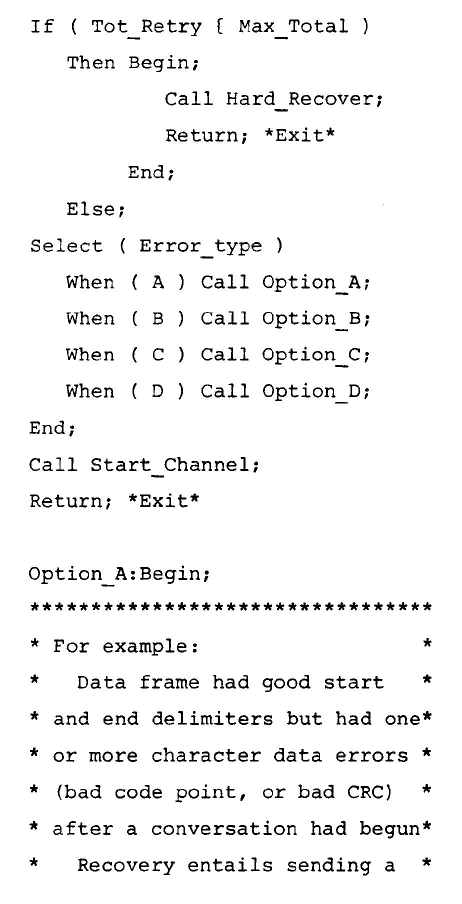

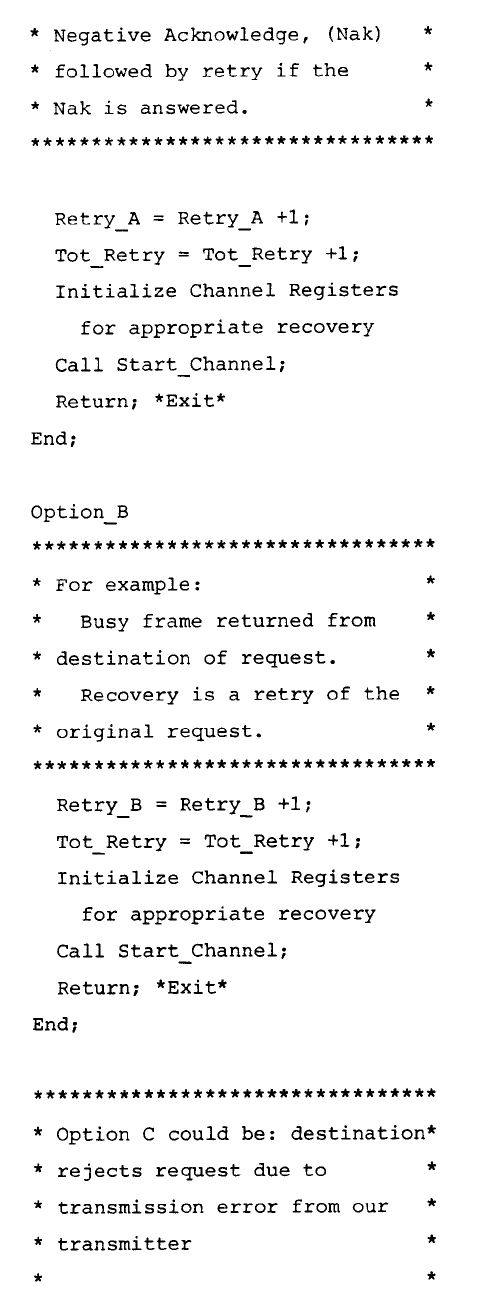

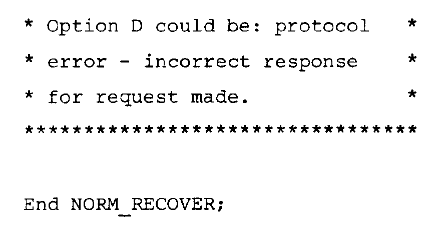

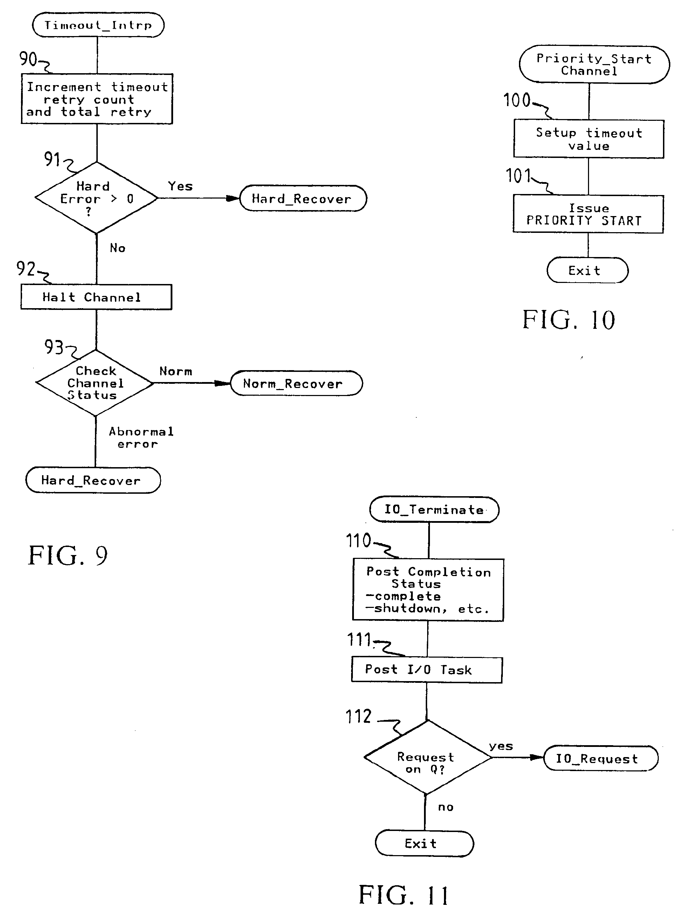

Returning to Fig 5, step 43, assume that an abnormal error is encountered which requires the hard (abnormal) error recovery operation. The hard error recovery operation is described with reference to Fig. 7. At 60 in Fig. 7 a hard error count is tested. If the hard error count exceeds a predetermined maximum, at 61 the channel must be shut down, after which the I/O task is terminated, as described below with reference to Fig. 11. Assuming, at 60, that the hard error count does not exceed the predetermined maximum, at 62 the hard error count is incremented. Then, at 63 an appropriate hard recover option is selected. Only one such recovery option "A" will be described, for the purposes of illustration, although those skilled in the art will appreciate that there are numerous hard recovery options which could be used, depending on the nature of the abnormal error. At 64 the channel is set up for the option "A" recovery and the operation then proceeds to the priority channel start operation of Fig. 10. Those skilled in the art will appreciate that each type of abnormal error may have a unique, optimum recovery option, which is chosen in step 63 according to the type of abnormal error that is detected.

The following programming design language listing is another form of the description of the above hard recover operation. This listing parallels the operation described above for Fig. 7.

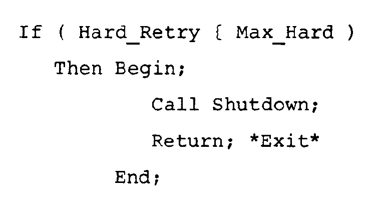

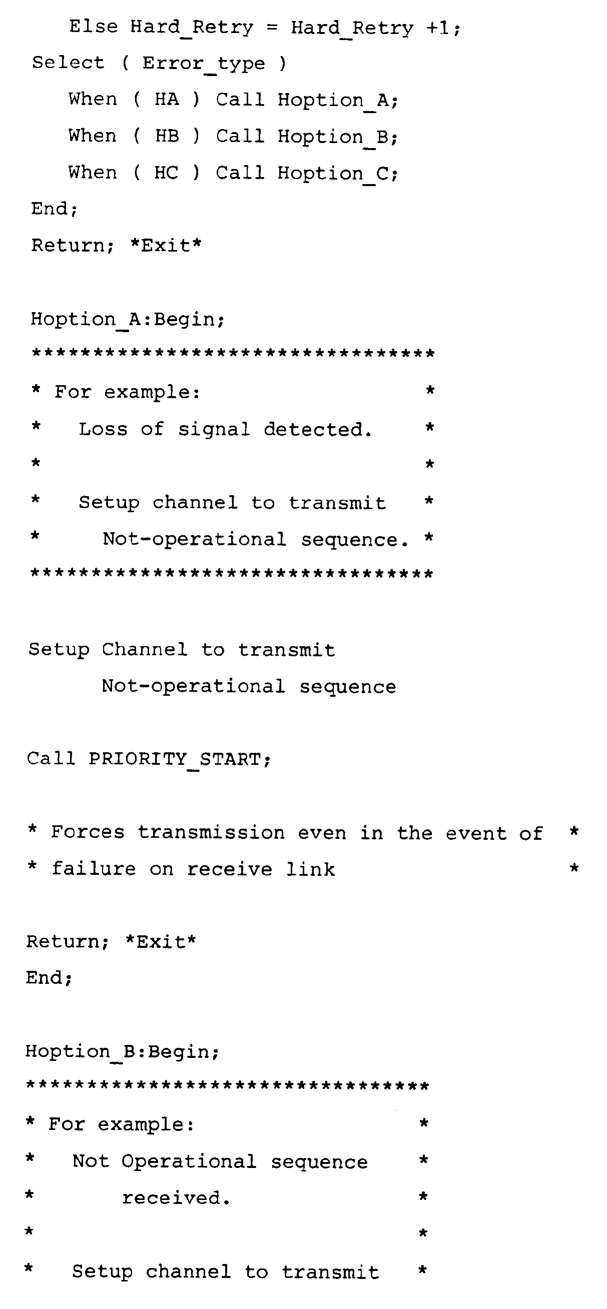

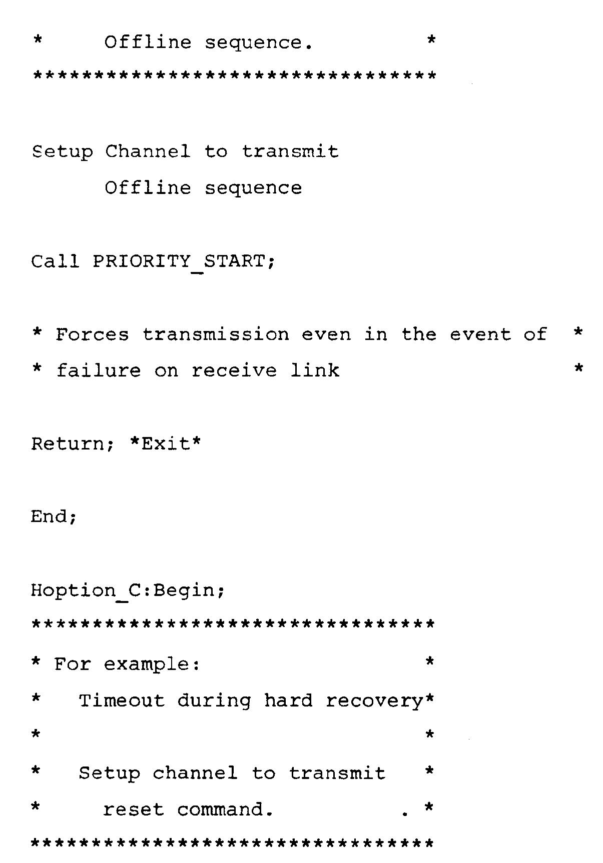

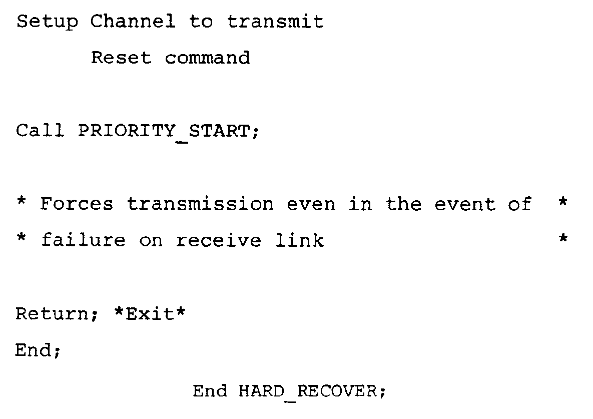

For the priority channel start of Fig. 10, at 100 a time out is established to abort this process if it is not completed before the end of the time out. Thereafter, at 101 the priority start command is issued which causes the I/O request to be honoured without regard to the error protections of normal operations.

The following programming design language listing is another form of the description of the above priority start operation. This listing parallels the operation described above for Fig. 10.

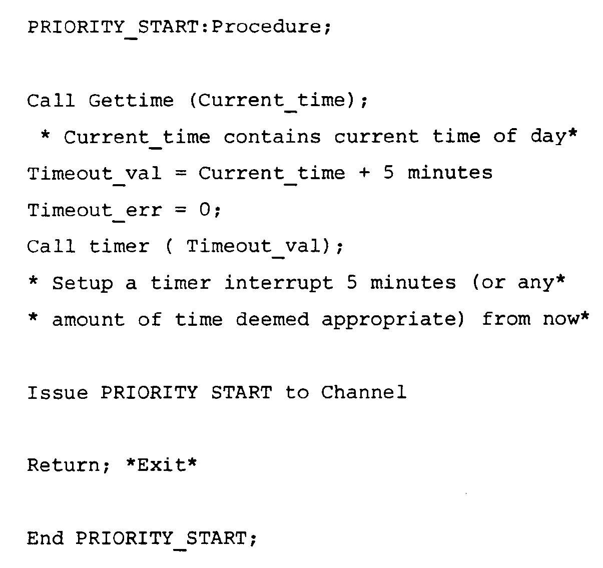

Fig. 8 shows the operation associated with a channel interrupt. In Fig. 5, when the interrupt occurs after 41 as a continuation of the normal start operation when the status of the channel is good, the operation proceeds to 69 in Fig. 8, at which point the time out established at block 40 of Fig. 5 is reset. Then, at 70 the status of the channel is tested. If the last channel operation (i.e., this operation could be a step in an error recovery operation or the original I/O request) was completed without error, at 71 a test is made to determine if the queued I/O request is complete. If so the operation terminates. If not, an error is assumed and at 72 a test is made to determine if the hard error count exceeds zero. If a normal error prevented the completion, the operation proceeds to the normal recover operation described above for Fig. 6. If an abnormal error prevented the completion, the operation proceeds to the hard recover operation described above for Fig. 7. At 70, if an error was detected when the channel status was tested, at 73 the severity of the error is determined. If a normal error prevented the completion, the operation proceeds to the normal recover operation described above for Fig. 6. If an abnormal error prevented the completion, the operation proceeds to the hard recover operation described above for Fig. 7.

The following programming design language listing is another form of the description of the above channel interrupt operation. This listing parallels the operation described above for Fig. 8.

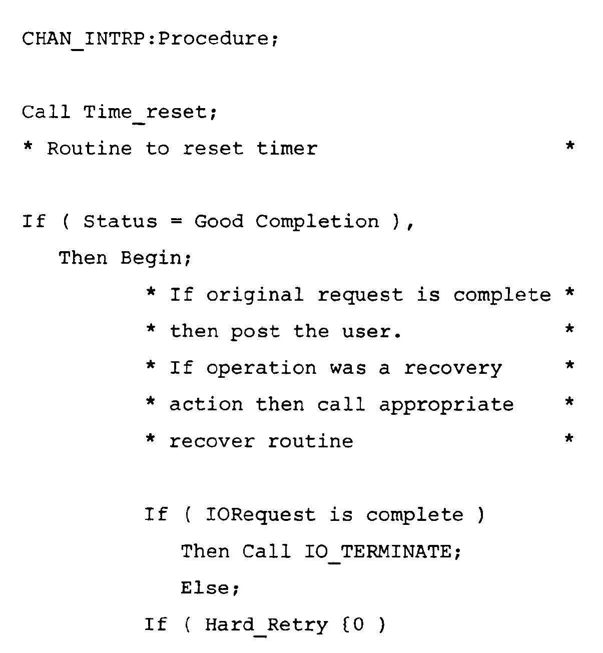

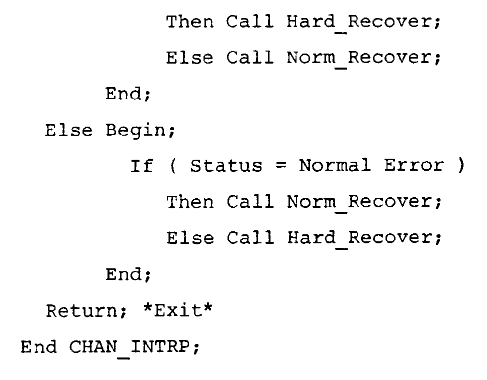

Fig. 11 shows the operation associated with an I/O termination. This operation is used when the I/O request is complete. In Figs. 7 and 8 when the I/O termination occurs after blocks 61 and 71, respectively, the operation proceeds to 110 in Fig. 11 at which point status information is posted to indicate that the operation is complete (without errors or with errors that allow for a retry) or the channel is shut down due to an unrecoverable hard error. At 111 the I/O task is posted and and 112 a test is made to determine if there is an I/O request on queue. If so, the operation proceeds back to the beginning of Fig. 4 to process the I/O request. If not, the operation is exited.

The following programming design language listing is another form of the description of the above I/O termination operation. This listing parallels the operation described above for Fig. 11.

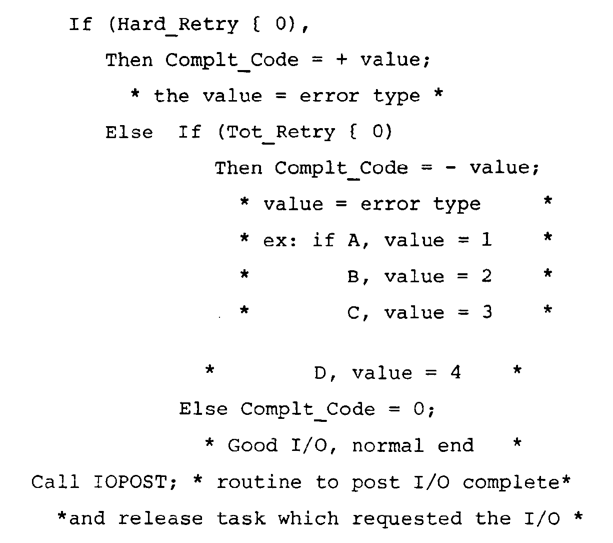

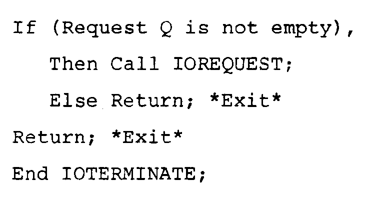

Fig. 9 shows the operation of a timeout interrupt, which may be used when the timeouts established at blocks 40 and 100 of Figs. 5 and 10 have been exceeded. In Fig. 9, at 90 both a timeout retry counter and a total count of retries are incremented. At 91 a test is made to determine if the number of hard errors exceeds zero. If so the operation proceeds to the hard recover operation described above for Fig. 7. If not, at 92 the operation of the channel is halted. Then, at 93 a test is made to determine the status of the channel. If a normal error led to the timeout, then the normal recover operation of Fig. 6 is taken. If an abnormal error led to the timeout, then the hard recover operation of Fig. 7 is entered.

The following programming design language listing is another form of the description of the above timeout interrupt operation. This listing parallels the operation described above for Fig. 9.

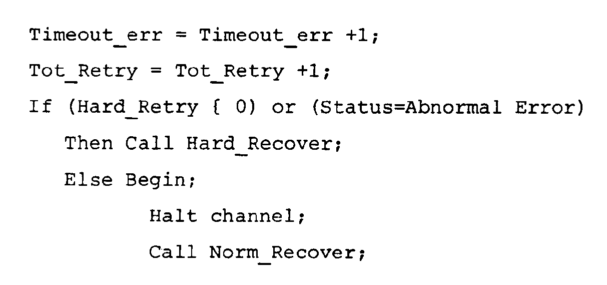

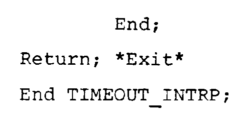

In summary a technique has been described for use with a link communications system or other such channel for conveying data, which system or channel includes error checking circuitry and protection from attempting communication through the link or channel when error conditions are indicated. The invention overcomes the inability of attempting to use the channel to convey error clearing routines or diagnostic data on the channel during such an error condition by the provision of a priority start technique in which a start of transmission over the channel is attempted without reference to any of the protective features which would otherwise prevent a normal start command from being honoured. After encountering an error associated with the channel, tests are made to determine if the error is a normal error or an abnormal error. The recovery operation following a normal error ends with a normal channel start attempt. The recovery following an abnormal error includes the priority start which ignores the fact that the error would otherwise preclude starting the channel according to the normal channel start technique.

## Claims

1. In a data processing system having a channel (11-16) for conveying data between first and second devices, which system includes error checking (13) and protection (14) from attempting communication through said channel during the presence of an error condition, a method for utilizing said channel during said error condition characterised by the steps of:
testing (43) said error condition to determine if said error condition is a soft error or a hard error; and
issuing a priority start command to start said channel of said data processing system when a request to utilize said channel is presented during the presence of an hard error.

2. A method as claimed in Claim 1 further comprising setting a timeout value (40) prior to said issuing said priority start command when said request to utilize said channel is presented during said presence of said hard error.

3. A method as claimed in Claim 2 further comprising ceasing said issuing said priority start command if said timeout value is exceeded while attempting to execute said priority start command.

4. A method as claimed in Claim 3 further comprising incrementing a counter each time a priority start command is issued.

5. A method as claimed in Claim 4 further comprising inhibiting (60-61) the subsequent issuance of one of said priority start commands when a count in said counter exceeds a predetermined value.

6. A data processing system comprising:
a channel (1-16) for conveying data between first and second devices,
error checking (13) and protection (14) from attempting communication through said channel during the presence of an error condition,
and characterised by:
means for testing said error condition to determine if said error condition is a soft error or a hard error; and
means responsive to said means for testing for issuing a priority start command to start said channel of said data processing system when a request to utilize said channel is presented during the presence of a hard error.

7. A system as claimed in Claim 6 wherein said means for issuing further comprises means for setting a timeout value prior to said issuing said priority start command when said request to utilize said channel is presented during said presence of said hard error.

8. A system as claimed in Claim 7 wherein said means for issuing further comprises means for ceasing said issuing said priority start command if said timeout value is exceeded while attempting to execute said priority start command.

9. A system as claimed in Claim 8 wherein said means for issuing further comprises means for incrementing a counter each time a priority start command is issued.

10. A system as claimed in Claim 9 wherein said means for issuing further comprises means for inhibiting the subsequent issuance of one of said priority start commands when a count in said counter exceeds a predetermined value.

## Patentansprüche

1. Für ein Datenverarbeitungssystem mit einem Kanal (11-16) zum Übertragen von Daten zwischen ersten und zweiten Geräten, welches System eine Fehlerprüfung (13) und den Schutz (14) vor dem Versuch eines Informationsaustausches über den Kanal während des Vorliegens einer Fehlerbedingung einschließt, ein Verfahren zum Benutzen des Kanals während der Fehlerbedingung, gekennzeichnet durch die Schritte des:
Testens (43) der Fehlerbedingung, um zu bestimmen, ob die Fehlerbedingung ein weicher Fehler oder ein harter Fehler ist,
und Herausgebens eines Befehls zum Prioritätsstart, um den Kanal des Datenverarbeitungssystems zu starten, wenn eine Anforderung, den Kanal zu benutzen, während des Vorliegens eines harten Fehlers vorgebracht wird.

2. Verfahren nach Anspruch 1, weiter umfassend das Einstellen eines Wertes für eine Zeitüberschreitung (40) vor dem Herausgeben des Befehls zum Prioritätsstart, wenn die Anforderung, den Kanal zu benutzen, während des Vorliegens des harten Fehlers vorgebracht wird.

3. Verfahren nach Anspruch 2, weiter umfassend das Beenden des Herausgebens des Befehls zum Prioritätsstart, wenn der Wert für eine Zeitüberschreitung während des Versuchs, den Befehl zum Prioritätsstart auszuführen, überschritten wird.

4. Verfahren nach Anspruch 3, weiter umfassend das Erhöhen eines Zählers jedesmal, wenn ein Befehl zum Prioritätsstart herausgegeben wird.

5. Verfahren nach Anspruch 4, weiter umfassend das Verhindern (60-61) des nachfolgenden Herausgebens eines der Befehle zum Prioritätsstart, wenn ein Zählerstand in dem Zähler einen vorgegebenen Wert überschreitet.

6. Datenverarbeitungssystem, umfassend:
einen Kanal (1-16) für das Übertragen von Daten zwischen ersten und zweiten Geräten,
eine Fehlerprüfung (13) und den Schutz (14) vor dem Versuch eines Informationsaustausches über den Kanal während des Vorliegens einer Fehlerbedingung,
und gekennzeichnet durch :
Mittel zum Testen der Fehlerbedingung, um zu bestimmen, ob die Fehlerbedingung ein weicher Fehler oder ein harter Fehler ist, und
Mittel, die auf die Mittel zum Testen ansprechen, um einen Befehl zum Prioritätsstart herauszugeben, um den Kanal des Datenverarbeitungssystems zu starten, wenn eine Anforderung, den Kanal zu benutzen, während des Vorliegens eines harten Fehlers vorgebracht wird.

7. System nach Anspruch 6, bei dem das Mittel zum Herausgeben weiter Mittel umfaßt zum Einstellen eines Wertes für eine Zeitüberschreitung vor dem Herausgeben des Befehls zum Prioritätsstart, wenn die Anforderung, den Kanal zu benutzen, während des Vorliegens des harten Fehlers vorgebracht wird.

8. System nach Anspruch 7, bei dem das Mittel zum Herausgeben weiter Mittel zum Beenden des Herausgebens des Befehls zum Prioritätsstart umfaßt, wenn der Wert für eine Zeitüberschreitung während des Versuchs überschritten wird, den Befehl zum Prioritätsstart auszuführen.

9. System nach Anspruch 8, bei dem das Mittel zum Herausgeben weiter Mittel umfaßt zum Erhöhen eines Zählers jedesmal dann, wenn ein Befehl zum Prioritätsstart herausgegeben wird.

10. System nach Anspruch 9, bei dem das Mittel zum Herausgeben weiter Mittel umfaßt zum Verhindern des nachfolgenden Herausgebens eines der Befehle zum Prioritätsstart, wenn ein Zählerstand in dem Zähler einen vorgegebenen Wert überschreitet.

## Revendications

1. Dans un système de traitement de données ayant un canal (11-16) pour transmettre des données entre un premier et un second dispositifs, lequel système comprend une vérification d'erreurs (13) et une protection (14) contre les tentatives de communication sur ledit canal durant la présence d'une condition d'erreur, méthode pour utiliser ledit canal durant ladite condition d'erreur caractérisée par les étapes de :
tester (43) ladite condition d'erreur pour déterminer si ladite condition d'erreur est une erreur programme ou une erreur machine ; et
délivrer une commande de démarrage en priorité pour démarrer ledit canal dudit système de traitement de données lorsqu'une requête pour utiliser ledit canal est présentée durant la présence d'une erreur machine.

2. Méthode telle que revendiquée dans la revendication 1 comprenant en outre la mise en route d'une valeur de décomptage de temps (40) avant de délivrer ladite commande de démarrage en priorité lorsque ladite requête pour utiliser ledit canal est présentée durant ladite présence de ladite erreur machine.

3. Méthode telle que revendiquée dans la revendication 2 comprenant la cessation de la délivrance de ladite commande de démarrage en priorité si ladite valeur de décomptage de temps est dépassée alors qu'on essaie d'exécuter ladite commande de démarrage en priorité.

4. Méthode telle que revendiquée dans la revendication 3 comprenant en outre l'incrémentation d'un compteur chaque fois qu'une commande de démarrage en priorité est délivrée.

5. Méthode telle que revendiquée dans la revendication 4 comprenant en outre l'inhibition (60-61) de la délivrance subséquente d'une desdites commandes de démarrage en priorité lorsque le compte dudit compteur dépasse une valeur prédéterminée.

6. Système de traitement de données comprenant un canal (11-16) pour transmettre des données entre un premier et un second dispositifs,
une vérification d'erreur (13) et une protection (14) contre les tentatives de communication sur ledit canal durant la présence d'une condition d'erreur,
et caractérisé par :
un moyen pour tester ladite condition d'erreur pour déterminer si ladite condition d'erreur est une erreur programme ou une erreur machine, et
un moyen sensible audit moyen de test pour délivrer une commande de démarrage en priorité et démarrer ledit canal dudit système de traitement de données lorsqu'une requête pour utiliser ledit canal est présentée durant la présence d'une erreur machine.

7. Système tel que revendiqué dans la revendication 6 dans lequel ledit moyen pour délivrer une commande comprend en outre un moyen pour établir une valeur de décomptage de temps avant la délivrance de ladite commande de démarrage en priorité lorsque ladite requête pour utiliser ledit canal est présentée durant ladite présence de ladite erreur machine.

8. Système tel que revendiqué dans la revendication 7, dans lequel ledit moyen pour délivrer une commande comprend en outre un moyen pour cesser ladite délivrance de ladite commande de démarrage en priorité si ladite valeur de décomptage de temps est dépassée alors qu'on essaie d'exécuter ladite commande de démarrage en priorité.

9. Système tel que revendiqué dans la revendication 8 dans lequel ledit moyen pour délivrer une commande comprend en outre un moyen pour incrémenter un compteur chaque fois qu'une commande de démarrage en priorité est délivrée.

10. Système tel que revendiqué dans la revendication 9 dans lequel ledit moyen pour délivrer une commande comprend en outre un moyen pour inhiber la délivrance subséquente d'une desdites commandes de démarrage en priorité lorsque le compte dudit compteur dépasse une valeur prédéterminée.
